Europäisches Patentamt

European Patent Office

Office européen des brevets

(11) Numéro de publication: **0 424 186 A1**

# DEMANDE DE BREVET EUROPEEN

(21) Numéro de dépôt: **90401994.0**

(22) Date de dépôt: **11.07.90**

(51) Int. Cl.5: **B65G 23/44**, B65G 39/16

(30) Priorité: **17.10.89 FR 8913552**

(43) Date de publication de la demande:
**24.04.91 Bulletin 91/17**

(84) Etats contractants désignés:
**AT BE CH DE DK ES FR GB GR IT LI LU NL SE**

(71) Demandeur: **MACHINES SPECIALES ET MANUTENTION**
**66 Rue de Tournan Z.A.**
**Jossigny(FR)**

(72) Inventeur: **Hilaire, Gérard**
**Les Cerneaux, Chemin des Clos St. Paires**
**Gouvernes**
**Lagny Sur Marne, Seine et Marne(FR)**
Inventeur: **Benoist, Noel**
**6 Seintier aux Pigeons**
**Saint Fiacre, Seine et Marne(FR)**

(74) Mandataire: **Cabinet Pierre HERRBURGER**
**115, Boulevard Haussmann**
**F-75008 Paris(FR)**

(54) Convoyeur à bande comportant un moyen de réglage de la poulie de tension.

(57) Convoyeur à bande caractérisé en ce que le moyen de tension porte au moins une portée d'appui (16, 17) de la poulie de tension (8) par l'intermédiaire d'un moyen de réglage (21, 22) de la position de l'axe (XX) de la poulie (8), séparément du moyen (29, 30, 31, 32) de tension de la courroie (9).

FIG_1

# CONVOYEUR À BANDE COMPORTANT UN MOYEN DE RÉGLAGE DE LA POULIE DE TENSION

L'invention concerne un convoyeur à bande formé d'un ou plusieurs profils portant chacun un chemin de support et de guidage recevant une bande de transport, en boucle fermée, coopérant avec le chemin de guidage et passant sur une poulie motrice et sur une poulie de tension, celle-ci étant montée de manière réglable longitudinalement dans une coulisse par un moyen de tension pour être mise à la tension de fonctionnement.

Les convoyeurs à bande de ce type sont connus. Ils servent dans des installations de manutention pour le transport de paquets, de produits, etc... Suivant la nature des objets ou des produits transportés, on prévoit une ou plusieurs bandes transporteuses, juxtaposées ou écartées d'un certain intervalle.

Dans le cas le plus usuel, le convoyeur est constitué par deux bandes transporteuses.

Actuellement, ces convoyeurs utilisent des bandes transporteuses, sous la forme d'une boucle passant, comme déjà indiqué, sur une poulie motrice et une poulie de tension. Cette poulie de tension est nécessaire pour donner à la bande la tension requise à son fonctionnement. En effet, au moment de l'installation de la bande il faut allonger celle-ci de quelques pourcents pour induire dans la bande une tension dite de fonctionnement qui restera constante pendant toute la durée de vie de la bande. Pour réaliser cette mise en tension selon l'art antérieur, on agit sur les extrémités de l'axe qui porte la poulie. Les extrémités de l'axe portant la poulie, libre en rotation, sont des paliers logés de manière coulissante dans deux coulisses longitudinales d'une longueur suffisante pour la course de mise en tension. Les extrémités des paliers sont reliées par une liaison de type vis/écrou à des tiges filetées. Pour assurer la mise en tension on fait tourner les tiges filetées jusqu'à ce que la tension soit atteinte. Ces vis servent également à aligner la poulie par rapport à la bande pour éviter que la bande ne migre d'un côté ou de l'autre de la poulie et risque éventuellement de s'en dégager mais surtout de frotter contre le rebord correspondant du support de guidage dans lequel circule la bande.

Il est donc indispensable de bien aligner la poulie et la bande. Pour cela, on procède, selon l'art antérieur, par approximations successives, en vissant l'une et l'autre des deux tiges filetées pour assurer ce réglage.

Il s'agit d'un travail fastidieux d'autant plus qu'il doit être recommencé à chaque remplacement de la bande.

La présente invention a pour but de remédier à ces inconvénients et se propose de créer un moyen de tension permettant de réaliser une mise en tension et un alignement rapides de la poulie et de la bande.

A cet effet, l'invention concerne un convoyeur du type ci-dessus caractérisé en ce que le moyen de tension porte au moins une portée d'appui de la poulie de tension par l'intermédiaire d'un moyen de réglage de la position de l'axe de la poulie, séparément du moyen de tension de la courroie.

Ainsi, en séparant le réglage de la tension et celui de l'alignement de la poulie et de la bande, on simplifie considérablement ces réglages qui sont indépendants l'un de l'autre. En d'autres termes, le réglage de l'alignement de la poulie, fait après le réglage de la tension, ne provoque aucun déréglage de la tension.

Le démontage est aussi rapide puisqu'il suffit pour remplacer une bande usée, de détendre la fourche de mise en tension pour pouvoir libérer la poulie, l'extraire de ses coulisses et enlever la bande pour la remplacer par une nouvelle. La mise en tension se fera également en agissant sur une seule vis. Lorsque la tension sera atteinte, on procèdera, après essai, au réglage de l'alignement de la poulie et de la bande.

Suivant une autre caractéristique, les portées d'appui de la poulie de tension ont des extrémités à méplats reçues dans deux coulisses longitudinales réalisées dans les flasques du boîtier d'extrémité du convoyeur et elles prennent appui sur le moyen de tension constitué par une fourche montée pivotante dans le boîtier, autour d'un axe, et coopérant avec une vis pour mettre en tension la courroie par l'intermédiaire des dents de la fourche qui tirent sur les portées d'appui de la poulie.

Suivant une autre caractéristique, les portées d'appui de la poulie de tension comportent au moins un excentrique permettant le réglage de la position de l'axe de la poulie.

Suivant une autre caractéristique, les dents de la fourche du moyen de mise en tension sont courbes de manière concave pour recevoir les deux excentriques des paliers d'appui de la poulie.

La présente invention sera décrite plus en détail à l'aide d'un mode de réalisation représenté schématiquement dans les dessins annexés dans lesquels :

- la figure 1 est une vue en plan de l'extrémité d'un convoyeur à bande au niveau du boîtier de tension et de son raccordement au profil.

- la figure 2 est une vue en coupe verticale de l'extrémité du boîtier de tension et du profil auquel il est fixé.

- la figure 3 est une vue en coupe verticale selon III-III de la figure 1.

- la figure 4 est une vue de côté du boîtier de la figure 1.

Selon les figures, l'invention concerne un convoyeur à bande sans fin. Ce convoyeur est formé d'un ou plusieurs profils, parallèles, portant chacun un chemin de support et de guidage constituant une glissière sur et dans laquelle s'appuie une bande de transport. Cette bande sans fin passe à une extrémité sur une poulie de tension et à l'autre extrémité sur une poulie motrice.

La poulie de tension est portée par un boîtier lui-même fixé au profil.

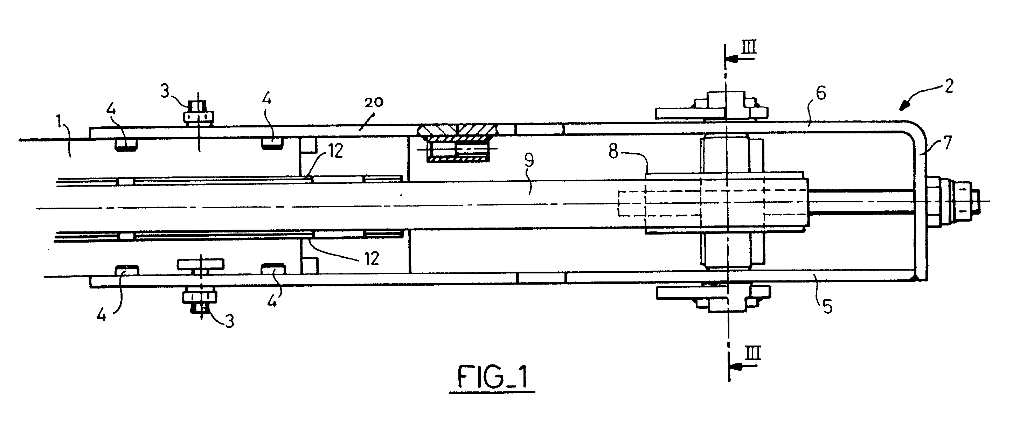

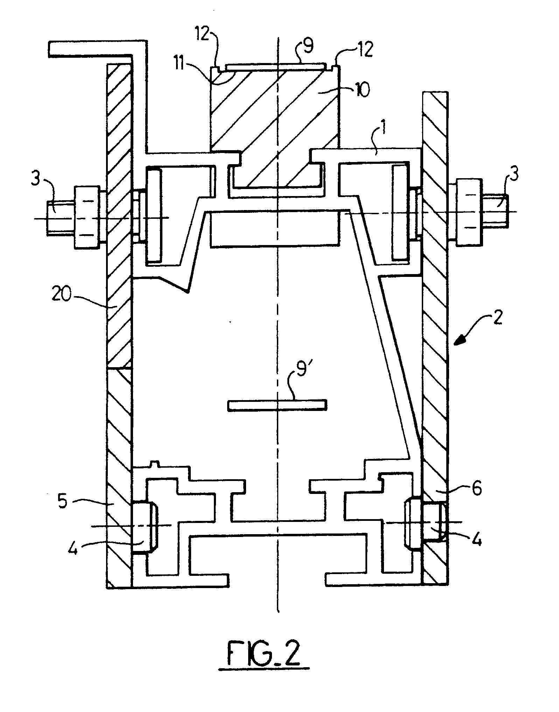

Les figures 1 et 2 montrent de manière générale un profil 1 en forme de caisson auquel est fixé le boîtier de tension 2.

La liaison entre le boîtier 2 et le profil 1 est assurée par des organes 3, 4, tels que des tétons de positionnement et des vis, qui ne seront pas détaillés.

Le boîtier se compose deux parois latérales 5, 6 et d'une extrémité 7, l'ensemble étant par exemple réalisé en tôle soudée. Ce boîtier peut également être réalisé en fonderie. Ce boîtier de tension 2 porte une poulie de tension 8 sur laquelle passe la bande transporteuse sans fin 9. A l'extrémité du boîtier située du côté du profil ou sur le profil, il est prévu un chemin de guidage 10 qui est constitué par un longeron en un matériau à faible coefficient de friction. La surface supérieure 11 est bordée de chaque côté par un rebord 12 délimitant avec la surface le chemin de support et de guidage de la bande 9. Le brin de retour 9' de la bande apparaît à la figure 2.

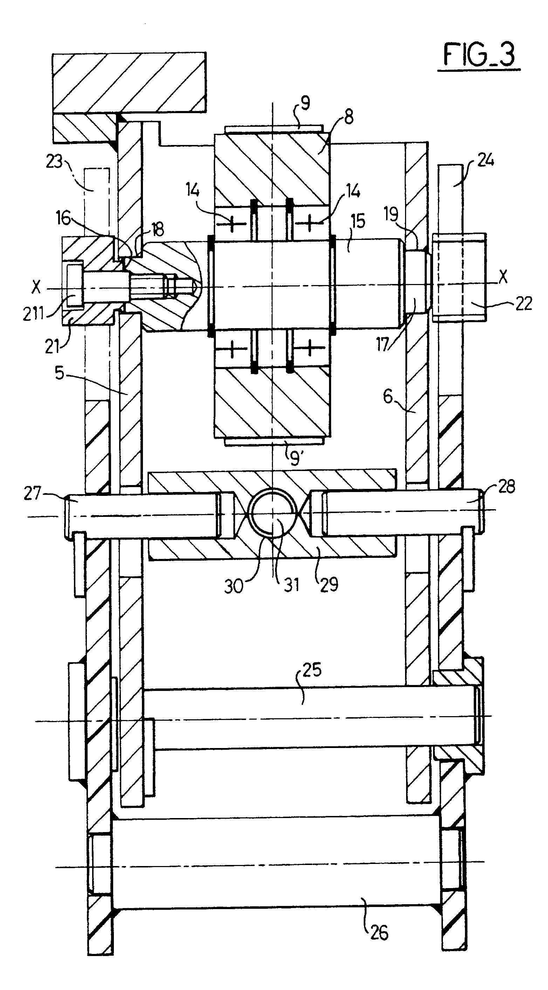

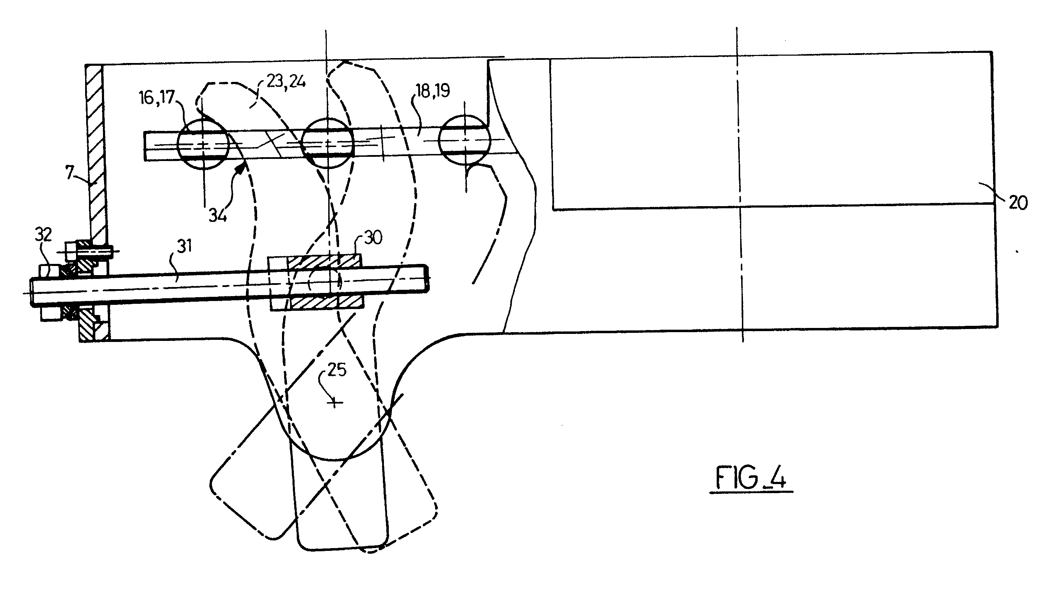

La mise en tension de fonctionnement de la bande 9 est assurée par les moyens de mise en tension apparaissant aux figures 3 et 4.

Ainsi, la poulie 8 est montée par l'intermédiaire de deux roulements 14 sur un axe 15 dont les extrémités à méplats 16, 17, formant des portées d'appui, sont logées dans deux coulisses 18, 19, réalisées dans les parois latérales 4, 5 du boîtier. Comme le montre la figure 4, les coulisses 18, 19 ont une forme de L couché ; ces coulisses débouchent en partie supérieure des côtés 4, 5 pour permettre le dégagement des extrémités à méplats 16, 17 pour mettre en place une nouvelle bande 9. Pour cette même raison un côté au moins est muni d'une trappe amovible 20 permettant le démontage de la bande jonctionnée sans fin sans nécessiter le démontage du boîtier 2. En l'absence des moyens décrits ci-après, l'axe 15 formant le support de la poulie 8 peut se positionner librement dans les coulisses 18, 19. Les extrémités de l'axe 15 portent chacune un excentrique 21, 22 ; ces excentriques s'appuient contre les dents 23, 24 en forme de flasques de la fourche du moyen de mise en tension. Les excentriques sont munis, chacun, d'une vis de blocage, seule la vis 211 de l'excentrique 21 apparaissent à la figure 3.

Cette fourche est constituée par les flasques 23, 24, reliés solidairement à un axe 25 monté pivotant dans les flasques 4, 5 du boîtier. L'extrémité inférieure des fourches est reliée rigidement par une entretoise 26. Entre l'extrémité supérieure et l'axe de pivotement 25, les flasques 23, 24 portent, par l'intermédiaire de deux éléments d'axe 27, 28, un bloc 29 muni d'un taraudage 30 vissé sur la tige filetée 31 dont la tête 32 sort par le fond 7 du boîtier. En vissant cette vis 31, 32, on fait avancer ou reculer le bloc 29. Ce mouvement commande le basculement de la fourche 23, 24, autour de son axe 25 si bien que les parties hautes 34 des deux flasques 23, 24, en forme de lunules, prenant appui sur les excentriques 21, 22, permettent d'assurer la mise en tension de la bande du convoyeur.

Il convient de noter ici que les bandes de tels convoyeurs doivent être mises à une tension dite de travail. Une telle opération se fait au moment de la mise en route d'une nouvelle courroie, après le remplacement d'une courroie ancienne usée ou déchirée.

Cette mise en tension consiste en un allongement d'un certain pourcentage de la bande. A cet effet, lorsque la bande nouvelle est mise en place, on tend légèrement la boucle de la bande pour éviter le mou. Puis on effectue, à l'aide du moyen de tension, un allongement de la boucle. Cet allongement s'exprime en un pourcentage et est donné par le fabricant des bandes. Cet allongement se traduit par une tension de la bande appelée la tension de fonctionnement.

Lorsque la bande est ainsi tendue, sa tension ne change plus au cours de son utilisation ; il n'y a ni allongement ni retrait jusqu'à son remplacement.

Cette mise en tension correspond pour des convoyeurs d'une certaine longueur, à une course de réglage de la tension d'une dizaine de centimètres voire plus, puisque l'allongement est de l'ordre de 2 %. Or, selon l'invention, une fois la bande transporteuse mise sous tension, on fait tourner le convoyeur pour régler l'alignement de la poulie 8. Il s'agit de l'alignement de l'axe X-X de la poulie. Cet alignement ne peut être mesuré puisque l'existence de cet axe géométrique n'a aucune importance en soi. En effet, les mouvements latéraux de la bande 9 résultent des différentes caractéristiques de la bande, de la poulie et de la coopération de ces deux éléments et il n'est pas possible de déterminer l'alignement de la poulie au préalable. Seuls des essais montrent que la bande a tendance à se déplacer vers la gauche ou vers la droite. Ce déplacement se corrige en modifiant la position de l'axe X-X grâce aux excentriques 21, 22 et des surfaces 34, moyens par lesquels la fourche 23, 24 du moyen de tension applique la tension à la poulie.

Or, comme l'excentricité nécessaire pour l'alignement de la poulie et de la bande n'est que de quelques millimètres, ce réglage de l'excentricité ne modifie pas ou n'influence pas la tension de la bande.

**Revendications**

1°) Convoyeur à bande formé d'un ou plusieurs profils portant chacun un chemin de support et de guidage recevant une bande de transport sans fin (9) coopérant avec le chemin de guidage (10, 11, 12) et passant sur une poulie motrice et sur une poulie de tension (8), celle-ci étant montée de manière réglable longitudinalement dans une coulisse par un moyen de tension pour être mise à la tension de fonctionnement, convoyeur caractérisé en ce que le moyen de tension porte au moins une portée d'appui (16, 17) de la poulie de tension (8) par l'intermédiaire d'un moyen de réglage (21, 22) de la position de l'axe (XX) de la poulie (8), séparément du moyen (29, 30, 31, 32) de tension de la courroie (9).

2°) Convoyeur selon la revendication 1, caractérisé en ce que les portées d'appui (16, 17) de la poulie de tension (8) sont reçus dans deux coulisses longitudinales (18, 19) réalisées dans les flasques (5, 6) du boîtier d'extrémité du convoyeur et prennent appui sur le moyen de tension constitué par une fourche (23, 24, 26) montée pivotante (25) dans le boîtier, autour d'un axe (25) et coopérant avec une vis (29, 30, 31, 32) pour mettre en tension la courroie (9) par l'intermédiaire des dents (23, 24) de la fourche qui tirent sur les portées d'appui (16, 17) de la poulie (8).

3°) Convoyeur selon la revendication 1, caractérisé en ce que les portées d'appui (16, 17) de l'axe (15) de la poulie de tension (8) comportent au moins un excentrique (21, 22) permettant le réglage de la position de l'axe (XX) de la poulie (8).

4°) Convoyeur selon la revendication 2, caractérisé en ce que les dents (23, 24) de la fourche du moyen de mise en tension sont courbes de manière concave pour recevoir les deux excentriques (21, 22) de la poulie (8).

FIG_1

EP 0 424 186 A1

FIG.2

FIG_3

FIG. 4

EP 0 424 186 A1

**Office européen des brevets**

# RAPPORT DE RECHERCHE EUROPEENNE

Numéro de la demande

**EP 90 40 1994**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-B-1 033 126  (FRÖLICH UND KLÜPFEL)<br>* le document en entier * | 1-4 | B 65 G<br>23/44<br>B 65 G 39/16 |
| Y | FR-A-2 117 781  (PARVEAU)<br>* page 6, lignes 10 - 12; figure 2 * | 1-4 | |
| A | FR-A-2 039 584  (GULLICK DOBSON LTD.)<br>* le document en entier * | 1-3 | |
| A | US-A-4 372 440  (RINGIS)<br>* colonne 4, lignes 29 - 35; figure 7 * | 1,2,4 | |

**DOMAINES TECHNIQUES RECHERCHES (Int. Cl.5)**

B 65 G
F 16 H
B 65 H

Le présent rapport de recherche a été établi pour toutes les revendications

| Lieu de la recherche | Date d'achèvement de la recherche | Examinateur |
|---|---|---|
| La Haye | 22 janvier 91 | NEVILLE D.J. |